# EUROPÄISCHE PATENTSCHRIFT

(11) **EP 3 242 107 B1**
(45) Veröffentlichungstag und Bekanntmachung des Hinweises auf die Patenterteilung: **08.04.2020**
(21) Anmeldenummer: 16168338.8
(22) Anmeldetag: 04.05.2016
(51) Int. Cl.: G01B 9/02, G01B 11/24

(54) **OPTISCHE INTERFEROMETRISCHE VORRICHTUNG ZUM ERFASSEN EINER 3D-STRUKTUR EINES OBJEKTS**
OPTICAL INTERFEROMETRIC DEVICE FOR DETECTING A 3D STRUCTURE OF AN OBJECT
DISPOSITIF OPTIQUE INTERFÉROMÉTRIQUE DE MESURE D'UNE STRUCTURE 3D D'UN OBJET

(43) Veröffentlichungstag der Anmeldung: 08.11.2017
(73) Patentinhaber: VOCO GmbH, 27472 Cuxhaven (DE)
(72) Erfinder: Knüttel, Dr. Alexander, 68519 Viernheim (DE)
(74) Vertreter: Durm Patentanwälte PartG mbB

(56) Entgegenhaltungen:
- EP-A1- 2 796 938
- DE-A1-102007 010 387

## Beschreibung

Die vorliegende Erfindung betrifft eine Vorrichtung zum Erfassen einer 3D-Struktur eines Objekts umfassend einen ersten Laser-Emitter, der Laserstrahlung mit einer ersten Wellenlänge erzeugt, und einen zweiten Laser-Emitter, der Laserstrahlung mit einer zweiten Wellenlänge erzeugt. Die beiden Wellenlängen unterscheiden sich voneinander. Die Vorrichtung umfasst weiter einen ersten Strahlteiler, der die Laserstrahlung der Laser-Emitter jeweils in eine Referenzstrahlung und eine Beleuchtungsstrahlung aufteilt, wobei die Beleuchtungsstrahlung auf das zu vermessende Objekt trifft, von dem Objekt als Objektstrahlung reflektiert wird und mit einer Referenzstrahlung interferiert. Ein Detektor nimmt die daraus entstehenden Interferenzmuster auf.

Derartige Vorrichtungen werden beispielsweise in der Dentaltechnik zum Erfassen von einzelnen Zähnen oder ganzen Gebissen verwendet. Soll beispielsweise ein Gebissmodell eines Patienten erstellt werden, so kann das Abtasten des realen Gebisses vollkommen berührungslos erfolgen. Das Anfertigen von Abdrücken direkt am Patienten entfällt damit vollständig.

Aus der EP 2 796 938 A1 / B1 ist eine solche Vorrichtung bekannt. Sie arbeitet nach dem Prinzip der digitalen Holographie. Mindestens zwei Laser-Emitter senden Laserstrahlung mit unterschiedlichen Wellenlängen aus. Diese wird mithilfe eines Strahlteilers in Referenz- und Beleuchtungsstrahlung aufgeteilt. Während die Referenzstrahlung über eine Spiegelanordnung auf einen Detektor gelenkt wird, trifft die Beleuchtungsstrahlung auf das zu erfassende Objekt. Sie wird von dem Objekt als Objektstrahlung reflektiert und ebenfalls zu dem Detektor geleitet. Referenz- und Objektstrahlung einer Wellenlänge interferieren miteinander. Die daraus entstehenden Interferenzmuster werden durch den Detektor aufgenommen. Soll beispielsweise ein Zahn dreidimensional vermessen werden, so entsteht durch das Auftreffen der Beleuchtungsstrahlung auf die raue Oberfläche des Zahns Speckle-Streulicht, das zumindest teilweise auf den Detektor fällt. Je nach Oberflächenrauheit und Streuverhalten unterhalb der Oberfläche entsteht auch ein Speckle-Streulichtanteil, welcher als Speckle-Rauschen die Messergebnisse verfälscht.

DE 10 2007 010 387 A1 offenbart eine solche Vorrichtung zum Erfassen einer 3D-Struktur eines Objekts umfassend ein Selektionshologramm, das ausgebildet ist, um Objektstrahlung, die in einem vorgegebenen Einfallswinkelbereich auf das Selektionshologramm trifft, derart abzulenken, dass sie auf ihrem weiteren Weg in einem Winkel innerhalb eines Erfassungswinkelbereichs auf einen Erfassungsbereich des Detektors fällt.

Es ist daher Aufgabe der vorliegenden Erfindung, eine Vorrichtung zum Erfassen einer 3D-Struktur eines Objekts bereitzustellen, deren Messungen weniger anfällig sind gegen Streulicht und dem daraus resultierenden Speckle-Rauschen.

Bei der Lösung dieser Aufgabe wird von einer Vorrichtung gemäß dem Oberbegriff des Anspruchs 1 ausgegangen. Gelöst wird die Aufgabe durch die im Kennzeichen des Anspruchs 1 angegebenen Merkmale.

Die erfindungsgemäße Vorrichtung zum Erfassen einer 3D-Struktur eines Objekts umfasst wenigstens zwei Laser-Emitter, die Laserstrahlung mit jeweils einer Wellenlänge erzeugen. Die Wellenlängen der Laser-Emitter sind unterschiedlich. In einem ersten Strahlteiler wird die Laserstrahlung der Emitter jeweils in eine Referenzstrahlung und eine Beleuchtungsstrahlung aufgeteilt. Die Beleuchtungsstrahlung wird zu dem zu vermessenden Objekt gelenkt, von diesem als Objektstrahlung reflektiert und trifft dann auf einen Detektor. Die Referenzstrahlung wird direkt zu dem Detektor gelenkt und interferiert dort mit der Objektstrahlung. So entsteht ein Interferenzmuster, das von dem Detektor erfasst wird.

Die grundlegende Funktion der erfindungsgemäßen Vorrichtung ist in der EP 2 796 938 B1 beschrieben, auf die hiermit vollumfänglich Bezug genommen werden soll.

Die erfindungsgemäße Vorrichtung weist ein Selektionshologramm auf, das ausgebildet ist, um Objektstrahlung in einem vorgegebenen Einfallswinkelbereich geeignet abzulenken. Nur die von dem Objekt reflektierte Objektstrahlung, die in einem vorgegebenen Einfallswinkel auf das Selektionshologramm trifft, wird derart geeignet abgelenkt, dass sie auf ihrem weiteren Weg auf einen Erfassungsbereich des Detektors trifft. Objektstrahlung, die außerhalb des Einfallswinkelbereichs auf das Selektionshologramm trifft, lässt das Selektionshologramm ungebeugt passieren. Sie erreicht den Erfassungsbereich des Detektors nicht. Diese Objektstrahlung verläuft dann auf ihrem weiteren Weg am Erfassungsbereich des Detektors vorbei, teilweise sogar am Detektor vorbei. Die Strahlung trifft also außerhalb des Erfassungsbereichs auf den Detektor und folglich nicht auf den Erfassungsbereich bzw. nicht auf den Detektor.

Zur Erläuterung der Ausrichtung der Einfallswinkel wird Bezug genommen auf die Figuren und die dort verwendete Blattebene. Im vorliegenden Text werden deshalb die Begriffe "vertikal" als "senkrecht zur Blattebene" und "horizontal" als "in Blattebene", also parallel zum Detektor bzw. parallel zum Erfassungsbereich verstanden.

Bevorzugt erstreckt sich der Einfallswinkelbereich zum einen zwischen Strahlverlaufsrichtung, also der Verlaufsrichtung der Beleuchtungsstrahlung, und der Vertikalen. Zum anderen erstreckt sich der Einfallswinkelbereich auch zwischen Strahlverlaufsrichtung und der Horizontalen. Beispielsweise kann der (vertikale) Einfallswinkelbereich zwischen Strahlverlaufsrichtung und der Vertikalen deutlich größer sein als der (horizontale) Einfallswinkelbereich zwischen Strahlverlaufsrichtung und der Horizontalen. Bevorzugt beträgt er zwischen Strahlverlaufsrichtung und der Vertikalen mehrere 100 mrad, so dass die über die gesamte Vertikale am Objekt reflektierte Objektstrahlung auf den Detektor trifft.

Im Rahmen der vorliegenden Erfindung wird unter dem Erfassungsbereich des Detektors ein Teilbereich eines Detektionsbereichs verstanden. Der Detektionsbereich ist der Bereich, in dem der Detektor einfallende Strahlung detektiert, also zur Kenntnis nimmt und weiterverarbeiten kann. Der Erfassungsbereich ist dabei bevorzugt der innere Teilbereich des Detektionsbereichs. Strahlung, die auf den Erfassungsbereich fällt, kann von dem Detektor ausgewertet werden, so dass die fehlerfreie Erkennung von Interferenzmustern in der Praxis möglich ist. Strahlung, die zwar auf den Detektionsbereichs des Detektors aber außerhalb des Erfassungsbereichs auftrifft, also in einem Randbereich des Detektionsbereichs, erlaubt keine interferometrische Detektion. Diese Strahlung trifft obendrein unter solchen Winkelkonditionen auf den Detektor, dass kein sinnvolles interferenzfähiges Signal entstehen kann und somit keine, jedenfalls keine robuste und fehlerfreie Erkennung von Interferenzmustern durch den Detektor möglich ist. Mit anderen Worten muss die Objektstrahlung in einem vorgegebenen Winkelbereich (Einfallswinkelbereich) in Richtung des Detektors verlaufen, damit sie auf den Erfassungsbereich und nicht nur auf den Detektionsbereich trifft. Objektstrahlung, die mit Einfallswinkeln von mehr als 100 mrad verläuft, ermöglicht keine aussagekräftige und fehlerfreie Auswertung beim Auftreffen auf den Detektor.

Daneben muss auch die Strahlung, die innerhalb des Erfassungsbereichs auf den Detektor trifft, innerhalb eines bestimmten Winkelbereichs auf den Detektor bzw. den Erfassungsbereich auftreffen, damit ein sinnvolles interferenzfähiges Signal entsteht, das eine aussagekräftige Auswertung möglich macht. Der Winkelbereich, Erfassungswinkelbereich genannt, wird gegen das Lot auf die Oberfläche des Erfassungsbereichs des Detektors gemessen. Der Erfassungswinkelbereich ist bevorzugt kleiner als der Einfallswinkelbereich zwischen Strahlverlaufsrichtung und der Horizontalen. Der Erfassungswinkelbereich kann bevorzugt Winkel kleiner 10 Grad umfassen. Der sehr bevorzugte Winkelbereich ist kleiner 8 Grad. Strahlung, die mit einem Winkel außerhalb des Erfassungswinkelbereichs auf den Erfassungsbereich auftrifft, lässt sich nicht zuverlässig und robust auswerten.

In einer bevorzugten Ausführungsform umfasst die erfindungsgemäße Vorrichtung eine Auswerteeinheit, die auf den Erfassungsbereich auftreffende Strahlung auswertet. Dabei wird bevorzugt nur die Strahlung bei einer Auswertung berücksichtigt, die in einem Winkel innerhalb des Erfassungswinkelbereichs auf den Erfassungsbereich des Detektors auftrifft. Strahlung, die mit einem Einfallswinkel, der außerhalb des Erfassungswinkelbereichs liegt, auf den Detektor bzw. den Erfassungsbereich auftrifft, wird bei der Auswertung nicht berücksichtigt. Die Auswerteeinheit kann in den Detektor integriert, als separates Element ausgeführt oder in einem anderen Element der Vorrichtung enthalten sein.

Besonders bevorzugt ist das Selektionshologramm ein Volumenhologramm. Es ist so ausgebildet, dass ausschließlich Objektstrahlung unter Erfüllung der Bragg-Gleichung geeignet abgelenkt wird, damit sie auf ihrem weiteren Weg auf den Erfassungsbereich des Detektors trifft. Bei Nichterfüllung der Bragg-Gleichung passiert die Objektstrahlung das Volumenhologramm ungebeugt. Die Bragg-Gleichung verknüpft unter anderem die Wellenlänge der Strahlung mit ihrem Einfallswinkel auf die Gitterebene des Selektionshologramms. Der vorgegebene Einfallswinkelbereich, in dem das Selektionshologramm die Objektstrahlung auf den Erfassungsbereich des Detektors lenkt, hängt also von der Wellenlänge der Objektstrahlung ab. Anders ausgedrückt ist für jede Wellenlänge der Laserstrahlung ein eigener Einfallswinkelbereich definiert, in dem die betreffende Objektstrahlung in Richtung des Erfassungsbereichs abgelenkt wird. Bevorzugt wird die durch das Selektionshologramm abgelenkte Objektstrahlung vom Detektor weg gelenkt. Der Winkel der Ablenkung beträgt bevorzugt 5 bis 30 Grad, besonders bevorzugt um 10 bis 20 Grad, weiter bevorzugt ca. 15 Grad.

Vorteilhafterweise weist die Vorrichtung einen zweiten Strahlteiler auf, der zwischen dem Selektionshologramm und dem Detektor angeordnet ist. Von dem Selektionshologramm abgelenkte Objektstrahlung trifft auf den Strahlteiler und wird derart in Richtung Detektor reflektiert, dass sie auf den Erfassungsbereich des Detektors fällt. Der Neigungswinkel des Strahlteilers ergibt sich bevorzugt aus dem Neigungswinkel des Selektionshologramms und aus der Tatsache, dass die Strahlung möglichst senkrecht auf den Detektor fallen soll. Bevorzugt ist der zweite Strahlteiler so angeordnet, dass ein Winkel von höchstens 45 Grad zwischen der Oberfläche des zweiten Strahlteilers und dem Detektor gebildet wird. Besonders bevorzugt ist der Winkel kleiner oder gleich 40 Grad, weiter bevorzugt liegt er zwischen 20 und 40 Grad. In einer bevorzugten Ausführungsform hat sich im praktischen Einsatz ein Winkel von kleiner 40 Grad als besonders geeignet erwiesen. Damit ließ sich ein besonders kleiner Bauraum der Vorrichtung erzielen.

Vorteilhafterweise ist der zweite Strahlteiler derart angeordnet, dass Objektstrahlung, die das Selektionshologramm ungebeugt verlässt, auf den zweiten Strahlteller trifft, aber derart weitergeleitet wird, dass sie am Erfassungsbereich des Detektors vorbeiläuft. Streulicht passiert das Selektionshologramm ungebeugt und trifft deshalb nicht auf den Erfassungsbereich des Detektors. Es kann damit das Messergebnis nicht verfälschen.

In einer bevorzugten Ausführungsform sind die Laser-Emitter voneinander beabstandet angeordnet. Das Verhältnis der Wellenlängendifferenz zwischen den Wellenlängen der einzelnen Laser-Emitter und dem Abstand der Laser-Emitter zueinander liegt bevorzugt im Bereich von 1:10⁶ bis 1:10³, bevorzugt im Bereich von 1:10⁵ bis 1:(5*10⁵). Diese Werte sind typisch für eine Zentralwellenlänge λ₀ = 900 nm und können für andere Wellenlängen abweichen.

Beispielsweise können die Laser-Emitter auf einem Emitter-Chip angeordnet und zumindest in horizontaler Richtung voneinander beanstandet sein. Laserstrahlung der einzelnen Laser-Emitter und somit mit unterschiedlicher Wellenlänge, trifft jeweils mit unterschiedlichen Einfallswinkeln auf den ersten Strahlteiler.

Bevorzugt weist die Vorrichtung eine Kollimier-Linse auf, die die Laserstrahlung kollimiert und in Richtung des ersten Strahlteilers lenkt. Sie ist zwischen den Laser-Emittern und dem ersten Strahlteiler angeordnet. Der erste Strahlteiler umfasst ein optisches Gitter, das die auftreffende Laserstrahlung in Abhängigkeit ihrer Wellenlängen und bei gegebenem Verhältnis von Wellenlängendifferenz und Abstand der Laser-Emitter derart ablenkt, dass die kollimierte Beleuchtungsstrahlung der Laser-Emitter den Strahlteiler mit einem maximalen Winkelspektrumsbereich von 0 bis 4 mrad, bevorzugt von 0,5 bis 3 mrad relativ zu einem Zentralstrahl verlassen. Optional kann der erste Strahlteiler als Strahlteiler-Cube ausgebildet sein.

Mittels des ersten Strahlteilers wird eine Einengung der Winkel-Dispersion bei gleichzeitig maximaler Lichtintensität erreicht. Bevorzugt erfolgt eine Aufteilung der Laserstrahlung in Referenz- und Beleuchtungsstrahlung derart, dass der Anteil an Referenzstrahlung deutlich kleiner ist als der Anteil der Beleuchtungsstrahlung; besonders bevorzugt liegt der Anteil der Referenzstrahlung unter 40 Prozent, sehr bevorzugt unter 20 Prozent.

Im Rahmen der vorliegenden Erfindung wird unter dem Begriff Zentralstrahl ein Laserstrahl verstanden, der eine optische Einrichtung, im obigen Fall den ersten Strahlteiler, mittig verlässt.

Vorteilhafterweise weist die Vorrichtung ein Dammann-Gitter auf, das die Beleuchtungsstrahlung eines Laser-Emitters in mehrere vertikal nebeneinanderliegende kollimierte Beleuchtungsstrahlen aufteilt. Mit Bezug auf die Figuren wird im vorliegenden Text "vertikal" als "senkrecht zur Blattebene" und "horizontal" als "in Blattebene" verstanden. Die Beleuchtungsstrahlen treffen dann als Beleuchtungsspots auf das zu erfassende Objekt und sind bevorzugt so nebeneinander angeordnet, dass sie gemeinsam im Wesentlichen einen Beleuchtungsstreifen bilden. Dem Fachmann ist bekannt, dass Beleuchtungsstrahlung, die auf stark streuende Materialien trifft, wie beispielsweise einem Zahn, Streulicht und damit Speckle-Rauschen hervorruft. Es wurde erkannt, dass durch die Verwendung von Beleuchtungsspots und damit einer nicht vollständigen Ausleuchtung eines Beleuchtungsstreifens, das Speckle-Rauschen deutlich reduziert werden kann.

Besonders bevorzugt weist die Vorrichtung ein Auffächerhologramm auf, das in Strahlverlaufsrichtung hinter dem ersten Strahlteiler bzw. hinter dem optionalen Damman-Gitter angeordnet ist. Das Auffächerhologramm fächert die Beleuchtungsstrahlen in horizontaler Richtung derart auf, dass mehrere Beleuchtungsstreifen auf das Objekt treffen. Bevorzugt wird ein Mittenstreifen, besonders bevorzugt zwei Randstreifen und ein Mittenstreifen erzeugt. Bevorzugt treffen die Beleuchtungsstreifen horizontal nebeneinander auf das Objekt. Durch die Verwendung mehrerer Beleuchtungsstreifen kann auch ein Verkippen der Vorrichtung relativ zu dem Objekt erkannt werden.

Das Auffächerhologramm ist bevorzugt so ausgebildet, um die Beleuchtungsstreifen horizontal von der optischen Achse wegzulenken. Die Beleuchtungsstreifen werden derart abgelenkt, dass sie auf das Selektionshologramm treffen und von dem Selektionshologramm zur optischen Achse hin gebeugt werden, bevorzugt unter Erfüllung der jeweiligen Bragg-Bedingung. Bevorzugt gleicht das Selektionshologramm die Ablenkung der Beleuchtungsstreifen durch das Auffächerhologramm aus. Darüber hinaus kann das Selektionshologramm auch die Winkel-Dispersion (Strahlaufweitung) des Mittenstreifens korrigieren, so dass die Beleuchtungsstrahlung des Mittenstreifens kollimiert ist.

Im Rahmen der vorliegenden Erfindung wurde erkannt, dass die Beleuchtungsstrahlung möglichst vollständig kollimiert sein sollte, bevor sie auf das Auffächerhologramm bzw. das Selektionshologramm auftrifft. Nur so kann gewährleistet werden, dass die Strahlung von den beiden Hologrammen vollständig aufgefächert und abgelenkt wird. Darüber hinaus hat es sich als besonders vorteilhaft erwiesen, wenn die einzelnen optischen Einrichtungen, die zwischen den Laser-Emittern und dem Auffächer- bzw. dem Selektionshologramm angeordnet sind, exakt aufeinander abgestimmt und ausgerichtet sind. Dadurch wird sichergestellt, dass die Beleuchtungsstrahlung vollständig in die beiden Hologramme eingekoppelt wird. Der notwendige Justageaufwand kann allerdings teilweise erheblich sein.

In einer alternativen, bevorzugten Ausführungsform kann die Vorrichtung einen optischen Wellenleiter-Chip aufweisen, der den ersten Strahlteiler umfasst und in den die Laserstrahlung der Laser-Emitter eingekoppelt wird. Der optische Wellenleiter-Chip umfasst einen Arrayed Waveguide Grating. Dieser ist so ausgebildet, dass die Beleuchtungsstrahlung der einzelnen Laser-Emitter in einem Lichtleiter vereint wird. Durch Verwendung des optischen Wellenleiter-Chips entfällt die Justagearbeit der optischen Komponenten, die durch den Wellenleiter-Chip ersetzt werden. Insgesamt ergibt sich durch den optischen Wellenleiter-Chip ein vereinfachter Aufbau der Vorrichtung. Optional kann der optische Wellenleiter-Chip einen Mehrfach-Splitter umfassen, der die Beleuchtungsstrahlung der einzelnen Lichtleiter jeweils in mehrere Beleuchtungsspots aufteilt. In diesem Fall kann das Dammann-Gitter entfallen.

Vorteilhafterweise ist die Vorrichtung als Kavitätsscanner zur dreidimensionalen Erfassung einer Kavität mit einer Innenwandung ausgebildet. Dadurch erweitert sich der Einsatzbereich der erfindungsgemäßen Vorrichtung über das Erkennen von dreidimensionalen Außenflächen eines Objekts hinaus.

Besonders bevorzugt umfasst die Vorrichtung einen oder mehrere Wellenfront-Rotatoren. Sie sind so ausgebildet, um die Beleuchtungsstreifen zu rotieren. Die Beleuchtungsstreifen werden so rotiert, dass sie quer zur Strahlverlaufsrichtung, insbesondere radial zur optischen Achse angeordnet sind. Bevorzugt sind die Wellenfront-Rotatoren parallel zur optischen Achse positioniert. Für jeden Beleuchtungsstreifen wird bevorzugt ein Wellenfront-Rotator verwendet.

Vorteilhafterweise sind die rotierten Beleuchtungsstreifen gleichmäßig verteilt, so dass die Winkel zwischen jeweils zwei benachbarten Beleuchtungsstreifen übereinstimmen. Bevorzugt werden drei Beleuchtungsstreifen verwendet, die jeweils in einem Winkel von 120 Grad zueinander angeordnet sind. Beim Einsatz von vier Beleuchtungsstreifen werden sie mit je einer Winkeldifferenz von 90 Grad zueinander angeordnet. Im Rahmen der vorliegenden Erfindung wurde erkannt, dass beim Erfassen einer Kavität eine gleichmäßige Verteilung der Beleuchtungsstreifen in Umfangsrichtung zu einer schnelleren und sicheren Erfassung der Kavität führt.

Besonders bevorzugt ist in Strahlverlaufsrichtung hinter den Wellenfront-Rotatoren ein Prisma, bevorzugt ein Tripelprisma angeordnet. Das Tripelprisma lenkt drei mit dem Prisma korrespondierende Beleuchtungsstreifen um 90 Grad derart, dass die Beleuchtungsstreifen je parallel zur optischen Achse verlaufen.

Bevorzugt treffen die durch das Prisma oder Tripelprisma abgelenkten Beleuchtungsstreifen parallel zur Längsachse einer Kavität auf deren Innenwandung. Dies ist der Fall, wenn die Kavität zylindrisch oder annähernd zylindrisch und damit rotationssymmetrisch zu ihrer Längsachse aufgebaut ist. Werden beispielsweise drei Beleuchtungsstreifen mit gleichmäßigen Winkelabständen verwendet, so kann durch Rotation der Vorrichtung um 120 Grad die Innenwandung der Kavität über die Strecke des Beleuchtungsstreifens vollumfänglich erfasst werden. Wird die Vorrichtung gleichzeitig noch entlang der Längsachse verfahren, kann spiralförmig die komplette Innenwandung abgetastet werden. Der Vorteil von in Umfangsrichtung gleichmäßig angeordneten Beleuchtungsstreifen beim Erfassen einer zylindrischen Kavität besteht darin, dass selbst ein Positionieren der Vorrichtung außerhalb der Längsachse der Kavität in der Praxis zu keinem nennenswert schlechteren Ergebnis führt. Durch Verwendung mehrerer Beleuchtungsstreifen kann eine exzentrische Position der Vorrichtung berechnet und die Messergebnisse entsprechend korrigiert werden.

Die Erfindung wird nachfolgend anhand der in den Figuren dargestellten bevorzugten Ausführungsformen erläutert. Die darin dargestellten Besonderheiten können einzeln oder in Kombination verwendet werden, um bevorzugte Ausgestaltung der Erfindung zu schaffen. Die beschriebenen Ausführungsformen stellen keine Einschränkung der Allgemeinheit des in den Ansprüchen definierten Gegenstands dar. Es zeigen:
- Figur 1: eine schematische Darstellung einer erfindungsgemäßen Vorrichtung gemäß einer ersten Ausführungsform,
- Figur 2: einen Ausschnitt einer zweiten, alternativen Ausführungsform der erfindungsgemäßen Vorrichtung,
- Figur 3: einen Ausschnitt einer dritten Ausführungsform der erfindungsgemäßen Vorrichtung,
- Figur 4a: eine Projektion der Beleuchtungsstreifen nach einem Selektionshologramm der Vorrichtung gemäß Figur 3,
- Figur 4b: eine Projektion der Beleuchtungsstreifen nach den WellenfrontRotatoren der Vorrichtung gemäß Figur 3.

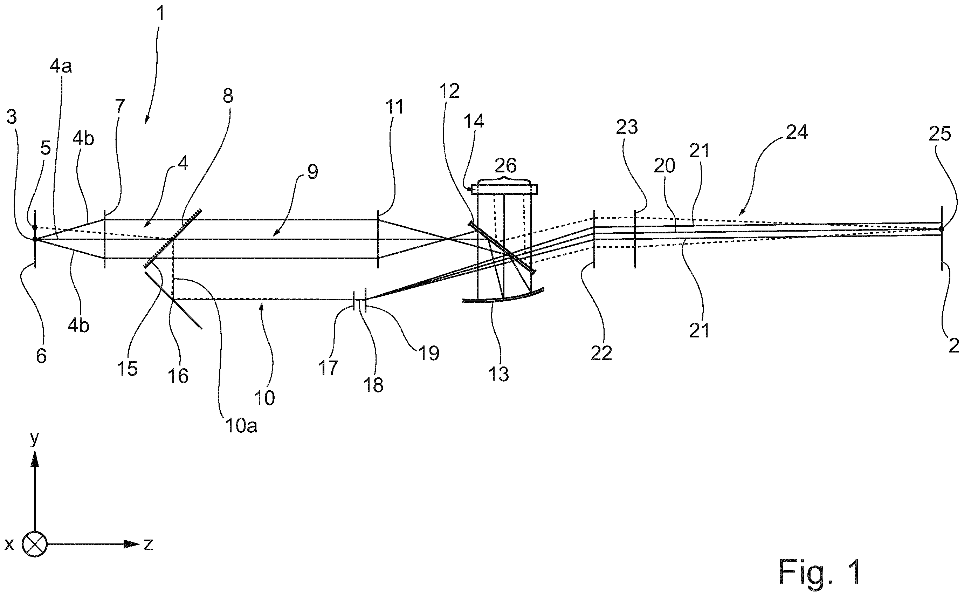

In Figur 1 ist eine Vorrichtung 1 zum Erfassen einer 3D-Struktur eines Objekts 2 dargestellt. Die grundlegende Funktion der Vorrichtung 1 ist in der EP 2 796 938 B1 beschrieben, auf die hiermit vollumfänglich Bezug genommen werden soll.

Zur vereinfachten Erläuterung der erfindungsgemäßen Vorrichtung 1 soll ein Koordinatensystem definiert werden, das in Figur 1 dargestellt ist und über eine X-, Y- und Z-Achse verfügt. Während die X-Achse die Vertikale (senkrecht zur Blattebene) und die Y-Achse die Horizontale (in Blattebene) bildet, zeigt die Z-Achse in Strahlverlaufsrichtung, das heißt in Figur 1 von links nach rechts in Richtung des Objekts 2.

Die Vorrichtung 1 umfasst einen ersten Laser-Emitter 3, der Laserstrahlung 4 mit einer ersten Wellenlänge erzeugt, und einen zweiten Laser-Emitter 5, der Laserstrahlung in einer zweiten Wellenlänge erzeugt (nicht dargestellt). Beide Laser-Emitter 3, 5 sind auf einem Emitter-Chip 6 angeordnet und senden Laserstrahlung unterschiedlicher Wellenlängen aus. Sie sind entlang der Y-Achse voneinander beabstandet. Bevorzugt beträgt das Verhältnis von Wellenlängendifferenz zwischen den Wellenlängen der einzelnen Laser-Emitter 3, 5 und dem Abstand der Laser-Emitter 3, 5 im Bereich von 1x10⁻⁶ bis 1x10⁻³, insbesondere liegt das Verhältnis bevorzugt in der Größenordnung von 1x10⁻⁵ bis 5x10⁻⁵.

Von der Laserstrahlung 4 ist in Figur 1 ein Zentralstrahl 4a und zwei Randstrahlen 4b dargestellt. Die Laserstrahlung 4 durchläuft eine als erste Linse 7 bezeichnete Kollimier-Linse, die die Laserstrahlung kollimiert, also parallelisiert. In Abhängigkeit der Abstände der Laser-Emitter 3, 5 entlang der Y-Achse weist die kollimierte Laserstrahlung der Laser-Emitter 3, 5 nach Durchgang durch die erste Linse 7 unterschiedliche Winkel relativ zu der Z-Achse auf. Zur vereinfachten Darstellung ist in Figur 1 nur die Laserstrahlung 4 des ersten Laser-Emitters 3 dargestellt. Diese verläuft nach der ersten Linse 7 parallel zur Z-Achse.

In Strahlverlaufsrichtung (Z-Achse) hinter der ersten Linse 7 (Kollimier-Linse) ist ein erster Strahlteiler 8 angeordnet, der die Laserstrahlung 4 der Laser-Emitter 3, 5 jeweils in eine Referenzstrahlung 9 und eine Beleuchtungsstrahlung 10 aufteilt. Bevorzugt liegt das Teilungsverhältnis bei 1 zu 9. 10 Prozent der Laserstrahlung 4 werden zur Referenzstrahlung 9; 90 Prozent der Laserstrahlung 4 werden als Beleuchtungsstrahlung 10 in einem definierten Winkel abgelenkt. Die Referenzstrahlung 9 wird also auf 10% der Laserstrahlung 4 abgeschwächt.

Die Referenzstrahlung 9, die den Strahlteiler praktisch ohne Ablenkung passiert, wird über eine zweite Linse 11 auf einen zweiten Strahlteiler 12 gelenkt, der sie über einen Hohlspiegel 13 auf einen Detektor 14 lenkt. In Abhängigkeit der Abstände der Laser-Emitter 3, 5 auf dem Emitter-Chip 6 trifft die Referenzstrahlung 9 der einzelnen Laser-Emitter 3, 5 mit unterschiedlichen Einfallswinkeln auf den Detektor 14 auf. Der zweite Strahlteiler 12 kann als halbdurchlässiger Spiegel ausgebildet sein.

Der erste Strahlteiler 8 umfasst ein optisches Gitter 15, das Teile der auftreffenden Laserstrahlung 4 in Abhängigkeit ihrer Wellenlängen und in Abhängigkeit des Verhältnisses von Wellenlängendifferenz und dem Abstand der Laser-Emitter auf dem Emitter-Chip 6 als Beleuchtungsstrahlung 10 ablenkt. Die Beleuchtungsstrahlung 10 ist in Figur 1 durch einen Zentralstrahl 10a dargestellt. Die Randstrahlen wurden zur Vereinfachung weggelassen.

Der abgelenkte Zentralstrahl 10a des Laser-Emitters 3 wird um 90 Grad abgelenkt und verläuft entlang der Y-Achse. Das optische Gitter 15 lenkt die Laserstrahlung 4 der übrigen Laser-Emitter 5 derart ab, dass die kollimierten Beleuchtungsstrahlungen der übrigen Laser-Emitter 5 mit einem maximalen Winkelspektrumsbereich relativ zum Zentralstrahl 10a von 0 bis 4 mrad, bevorzugt von 0,5 bis 3 mrad, besonders bevorzugt mit 1 bis 2 mrad den ersten Strahlteiler 8 verlassen.

Über einen Umlenkspiegel 16 wird die Beleuchtungsstrahlung 10 auf ein Damman-Gitter 17 gelenkt. Das Damman-Gitter 17 teilt die Beleuchtungsstrahlung 10 eines Laser-Emitters 3, 5 in mehrere vertikal (entlang der X-Achse) nebeneinander liegende, kollimierte Beleuchtungsstrahlen 18 auf, die als Beleuchtungsspot auf das zu erfassende Objekt 2 treffen. Die Beleuchtungsspots sind derart nebeneinander angeordnet, dass sie zusammen einen Beleuchtungsstreifen bilden.

Die Vorrichtung umfasst weiter ein Auffächerhologramm 19, das die Beleuchtungsstrahlen 18 in horizontaler Richtung (Y-Richtung) derart auffächert, dass mehrere Beleuchtungsstreifen (nicht dargestellt), nämlich ein Mittenstreifen und zwei Randstreifen, auf das Objekt 2 treffen. Die aufgefächerten Beleuchtungsstrahlen 18 sind in Figur 1 vereinfacht als ein Mittenstreifenstrahl 20 und zwei Randstreifenstrahlen 21 dargestellt. Diese werden vom Auffächerhologramm 19 derart horizontal von der optischen Achse (Horizontale) weg abgelenkt, dass die Beleuchtungsstreifen auf ein Selektionshologramm 22 treffen. Von diesem werden sie zur optischen Achse hin, also in Richtung der Z-Achse, gebeugt.

Wie in Figur 1 zu erkennen ist, wird der Mittenstreifenstrahl 20 durch das Selektionshologramm 22 derart abgelenkt, dass er entlang der Z-Achse und damit entlang der optischen Achse des Selektionshologramm 22 in Richtung des Objekts 2 verläuft. Das Selektionshologramm 22 kann die Ablenkung des Mittenstreifenstrahls 20 durch das Auffächerhologramm 19 vollständig ausgleichen. Hinsichtlich der beiden Randstreifenstrahlen 21 kann die Ablenkung des Auffächerhologramms 19 von dem Selektionshologramm 22 nicht vollständig ausgeglichen werden. Diese minimalen Verschiebungen in Y-Richtung spielen aber in der Praxis keine Rolle und können bei richtigem Design meist vernachlässigt werden.

In Strahlverlaufsrichtung hinter dem Selektionshologramm 22 befindet sich eine dritte Linse 23, die den Mittenstreifenstrahl 20 und die beiden Randstreifenstrahlen 21 bevorzugt so schwach fokusiert, dass diese parallel zur optischen Achse, das heißt parallel zur Z-Achse und parallel zueinander verlaufen und bevorzugt im Messbereich nahezu kollimiert sind. Bevorzugt werden die Strahlen durch die dritte Linse 23 leicht fokussiert, wodurch sich diese bevorzugt verjüngen und eine Strahltaille von bevorzugt ca. 50 µm bis 300 µm aufweisen. Die Beleuchtungsstrahlung 10 trifft dann in einem Mittenstreifen und zwei Randstreifen auf das Objekt 2 auf.

Im Rahmen der vorliegenden Erfindung wurde erkannt, dass eine koaxiale (fluchtende) Anordnung der beiden Linsen 7, 11 relativ zu dem Selektionshologramm 22 und der dritten Linse 23 besonders vorteilhaft ist. So kann Bauraum eingespart werden. In dieser Anordnung verlaufen der Zentralstrahl 4a der Laserstrahlung 4 und der Mittenstreifenstrahl 20 nach Durchtritt durch das Selektionshologramm 22 koaxial und fluchten miteinander. Dies wird durch die beiden Hologramme 19, 22 ermöglicht, die die Beleuchtungsstrahlung nach Reflexion am Umlenkspiegel 16 wieder koaxial zum Zentralstrahl 4a ausrichten.

Bevorzugt weist die Vorrichtung im Bereich des Detektors 14 und des Hohlspiegels 13 einen Durchmesser von höchstens 40 mm auf. Weiter bevorzugt beträgt der Durchmesser der Vorrichtung 1 im Bereich der dritten Linse 23 höchstens 15 mm und im Bereich ihres objektseitigem Endes höchstens 12 mm. Der Abstand in Z-Richtung zwischen dritter Linse 23 und objektseitigem Ende der Vorrichtung 1 beträgt bevorzugt etwa 80 mm bis 120 mm, besonders bevorzugt ca. 90mm. Andere Abmessungen sind möglich.

Wie in Figur 1 dargestellt, wird die Beleuchtungsstrahlung 10 am Objekt 2 als Objektstrahlung 24 reflektiert. In Figur 1 ist die Objektstrahlung 24 exemplarisch ausgehend von einem Objektpunkt 25 des Objekts 2 dargestellt (gestrichelt). Der Objektpunkt 25 kann vereinfacht als Punktlichtquelle betrachtet werden. Die Objektstrahlung 24 verläuft vom Objektpunkt 25 in Richtung der dritten Linse 23 und trifft von dieser kollimiert auf das Selektionshologramm 22.

Das Selektionshologramm 22 ist ein Volumenhologramm. Es lenkt ausschließlich Objektstrahlung 24, die in einem vorgegebenen Einfallswinkelbereich und unter Erfüllung der Bragg-Gleichung auf das Selektionshologramm 22 trifft, derart ab, dass die Objektstrahlung 24 auf ihrem weiteren Weg auf einen Erfassungsbereich 26 des Detektors 14 fällt. Die Objektstrahlung 24 trifft dabei bevorzugt in einem Einfallswinkel auf den Erfassungsbereich 26 des Detektors 14, der kleiner ist als ein vordefinierter Erfassungswinkelbereich. Derart auftreffende Strahlung kann von einer nicht gezeigten Auswerteeinheit ausgewertet werden. Der zweite Strahlteiler 12 kann derart angeordnet sein, dass die vom Selektionshologramm 22 in Figur 1 nach unten abgelenkte Objektstrahlung 24 auf den zweiten Strahlteiler 12 trifft und in Richtung des Erfassungsbereichs 26 des Detektors 12 abgelenkt wird. Bevorzugt ergibt sich der Winkel des zweiten Strahlteilers zur Z-Achse aus dem Neigungswinkel des Selektionshologramms und der Tatsache, dass das kollimierte Licht möglichst senkrecht auf den Detektor fallen soll. Besonders bevorzugt kann der zweite Strahlteiler relativ zur Z-Achse um einen Winkel kleiner 40 Grad gekippt angeordnet sein.

Andere vom Objekt 2 abgestrahlte Objektstrahlung 24, beispielsweise Streulicht, die außerhalb des Einfallswinkelbereichs auf das Selektionshologramm 22 trifft und daher die Bragg-Gleichung nicht erfüllt, passiert das Selektionshologramm 22 ungebeugt. Der zweite Strahlteiler 12 ist derart angeordnet, dass die ungebeugte Objektstrahlung 24 auf den zweiten Strahlteiler 12 trifft und derart reflektiert wird, dass sie entweder unter einem Winkel größer als der Erfassungswinkelbereich auf den Erfassungsbereich 26 des Detektors 12 trifft oder am Erfassungsbereich 26 des Detektors 14 vorbeiläuft. Sie kann den Detektor 12 durchaus außerhalb des Erfassungsbereichs 26, beispielsweise noch in einen Detektionsbereich des Detektors 14, treffen oder am Detektor 12 vorbeigelenkt werden.

Die Größe des Einfallswinkelbereichs hängt von den Parametern der Bragg-Gleichung ab, also unter anderem von der Wellenlänge der Objektstrahlung und dem Abstand zweier paralleler Gitterebenen im Selektionshologramm 22. Folglich ergeben sich für die unterschiedlichen Objektstrahlungen 24 unterschiedlicher Laser-Emitter 3, 5 unterschiedliche Einfallswinkelbereiche. Die Einfallswinkelbereiche sind zwischen Z- und Y-Achse sowie zwischen X- und Z-Achse festgelegt. Die Einfallswinkelbereiche zwischen X- und Z-Achse sind größer als die zwischen Z- und Y-Achse. Zwischen X- und Z-Achse betragen die Einfallswinkelbereich mehrere 100 mrad, sodass Objektstrahlung 24 über die gesamte Länge der einzelnen Beleuchtungsstreifen auf den Detektor 14 geleitet wird. Die auf den Erfassungsbereich 26 des Detektors 14 gelenkte Objektstrahlung 24 interferiert dann mit der Referenzstrahlung 9 derselben Wellenlänge. Die dadurch entstehenden Interferenzmuster werden vom Detektor 14 aufgenommen und ermöglichen eine Aussage über die dreidimensionale Struktur des Objekts 2.

Es versteht sich, dass die Bragg-Gleichung nicht nur von der Objektstrahlung 24 erfüllt sein muss, um vom Selektionshologramm 22 auf den zweiten Strahlteiler 12 gelenkt zu werden. Auch die Beleuchtungsstrahlung 10, die auf das Auffächerhologramm 19 trifft bzw. von diesem auf das Selektionshologramm 22 abgelenkt wird, muss die Bragg Gleichung erfüllen. Nur in diesem Fall lenken das Auffächerhologramm 19 und das Selektionshologramm 22 die Beleuchtungsstrahlung wie oben beschrieben ab. Die einzelnen optischen Einrichtungen in Strahlverlaufsrichtung vor dem Auffächerhologramm 19 müssen exakt aufeinander ausgerichtet und justiert sein. Die Beleuchtungsstrahlung 10 der Laser-Emitter 3, 5 muss in einem möglichst geringen Winkelspektrumsbereich relativ zum Zentralstrahl 10a verlaufen, bevorzugt in einem Winkelspektrumsbereich von 0,5 bis 3 mrad. Hierunter wird die Abweichung der Mittenstrahlen der einzelnen Emitter vom Zentralstrahl 10a (entspricht Mittenstrahl des mittigen Emitters 3) verstanden.

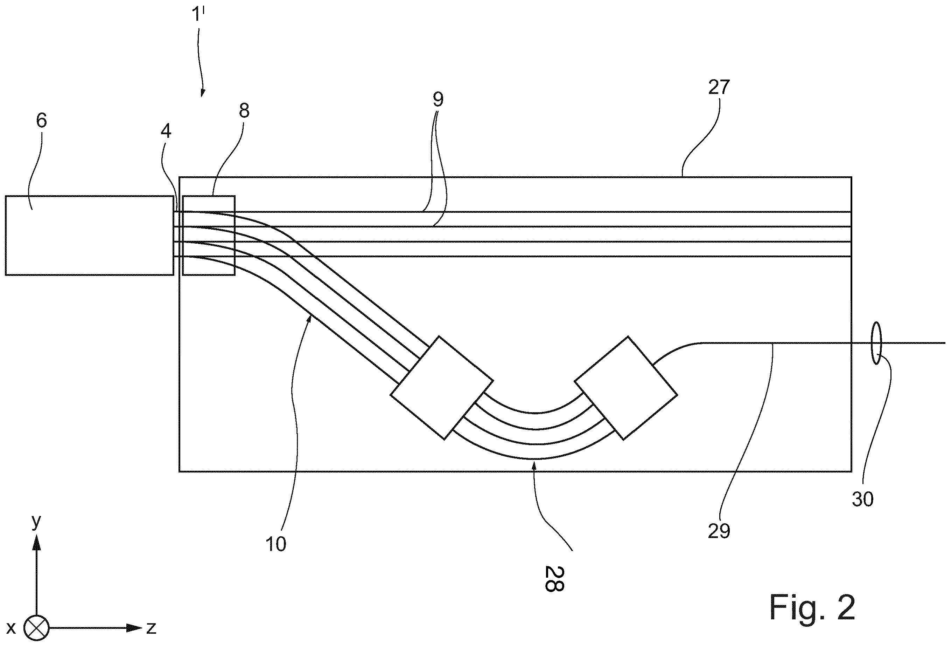

Figur 2 zeigt einen Ausschnitt einer zweiten Ausführungsform der erfindungsgemäßen Vorrichtung 1 (Fig. 1). Die Vorrichtung 1' umfasst ein als Emitter-Chip 6 ausgebildetes Lasermodul mit beispielhaft insgesamt vier (nicht dargestellten) Laser-Emittern und einen Wellenleiter-Chip 27, in den die Laserstrahlung 4 der Laser-Emitter eingekoppelt wird. Der Wellenleiter-Chip 27 umfasst den ersten Strahlteiler 8 (aus Fig. 1), der als Vierfachstrahlteiler ausgebildet ist und die Laserstrahlung 4 jedes Laser-Emitters in Referenzstrahlung 9 und Beleuchtungsstrahlung 10 aufteilt. Die Referenzstrahlung 9 durchläuft den Wellenleiter-Chip 27 unverändert. Wenn der Emitter-Chip 6 (Lasermodul) eine andere Anzahl von Emittern umfasst, ist der Wellenleiter-Chip 27 und der Strahlleiter 8 entsprechend abgewandelt und korrespondiert mit dem Emitter-Chip 6.

Der Wellenleiter-Chip 27 umfasst weiter einen Arrayed Waveguide Grating 28, das, die Beleuchtungsstrahlung 10 der einzelnen Laser-Emitter in einem Lichtleiter 29 vereint. Nach Austritt aus dem Wellenleiter-Chip 27 trifft die Beleuchtungsstrahlung 10 auf die Linse 30 und leitet diese an das Dammann-Gitter 17 aus Figur 1 weiter.

Die in Figur 2 dargestellten Bauteile der Vorrichtung 1' ersetzen hinsichtlich der Referenzstrahlung 9, ausgehend von den Laser-Emittern, alle optischen Bauteile in Strahlverlaufsrichtung bis zur zweiten Linse 11 (vgl. Figur 1). Bezüglich der Beleuchtungsstrahlung 10 werden ausgehend von den Laser-Emittern alle optischen Bauteile in Strahlverlaufsrichtung bis zum Dammann-Gitter 17 ersetzt. Die übrigen Bauteile der erfindungsgemäßen Vorrichtung 1 sind mit denen der Vorrichtung 1' identisch.

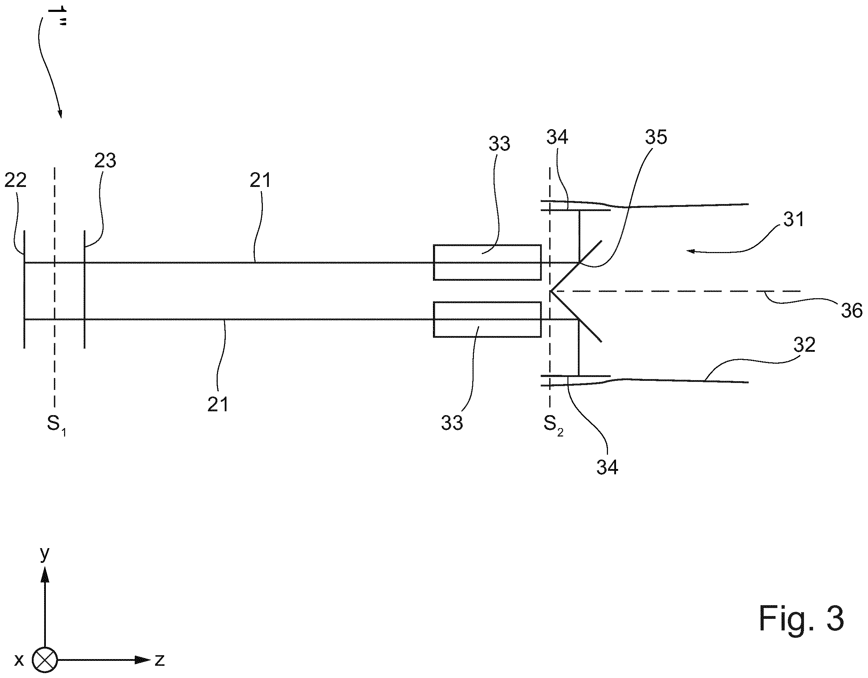

In Figur 3 ist ein Ausschnitt einer dritten Ausführungsform der Vorrichtung dargestellt. Bei der Vorrichtung 1" handelt es sich um einen Kavitätsscanner zur dreidimensionalen Erfassung einer Kavität 31 mit einer Innenwandung 32. Die Vorrichtung 1" unterscheidet sich von der in Figur 1 durch Wellenfront-Rotatoren 33. Diese rotieren die Beleuchtungsstreifen derart, dass sie radial zur optischen Achse angeordnet sind. Die Wellenfront-Rotatoren 33 sind in Strahlverlaufsrichtung nach dem Selektionshologramm 22 und nach der dritten Linse 23 angeordnet. Zur vereinfachten Darstellung sind in Figur 3 nur zwei Wellenfront-Rotatoren 33 dargestellt, die die Beleuchtung zweier Randstreifenstrahlen 21 rotieren.

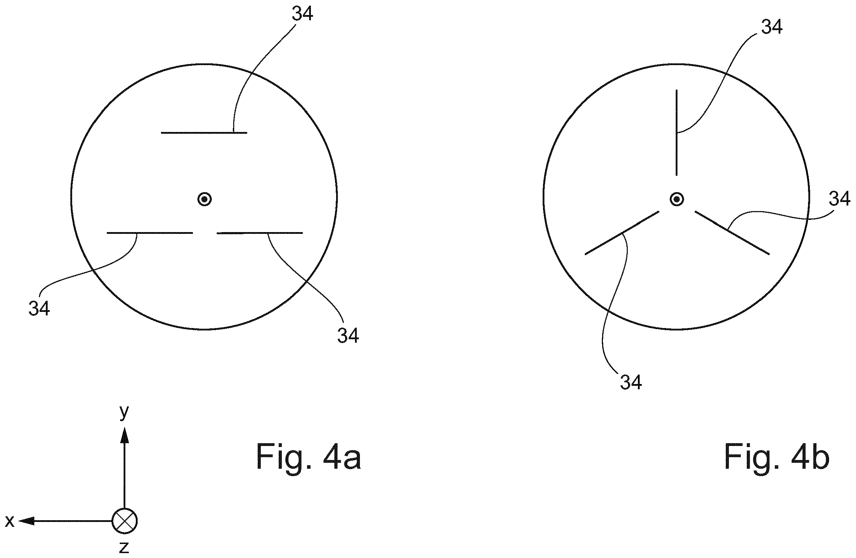

Figur 4a zeigt einen Schnitt durch den Strahlengang an der in Figur 3 mit dem Buchstaben S₁ markierten Position in Strahlverlaufsrichtung hinter dem Selektionshologramm 22. Wie in Figur 4a zu erkennen ist, wurden mithilfe des Dammann-Gitters 17 und dem Auffächerhologramm 19, die Beleuchtungsstrahlung 10 in drei Beleuchtungsstreifen 34 aufgefächert, die parallel zueinander angeordnet sind. Zwei der Beleuchtungsstreifen 34 sind nebeneinander angeordnet. Der dritte Beleuchtungsstreifen 34 liegt mittig über den beiden anderen Beleuchtungsstreifen 34.

Figur 4b zeigt einen Schnitt durch den Strahlengang an der in Figur 3 gekennzeichneten Stelle S₂ nachdem die Beleuchtungsstrahlung 10 die Wellenfront-Rotatoren 33 durchlaufen hat. Wie in Figur 4b zu erkennen ist, sind die rotierten Beleuchtungsstreifen bevorzugt gleichmäßig verteilt, so dass die Winkel zwischen jeweils zwei benachbarten Beleuchtungsstreifen übereinstimmen. Bevorzugt sind alle drei Beleuchtungsstreifen 34 in einem Winkel von 120 Grad zueinander angeordnet.

In Strahlverlaufsrichtung hinter den Wellenfront-Rotatoren 33 ist ein Tripelprisma 35 angeordnet, das die drei Beleuchtungsstreifen 34 um 90 Grad ablenkt. Die Beleuchtungsstreifen 34 verlaufen dann je parallel zu einer Längsachse der Kavität 31 und treffen auf deren Innenwandung 32. Durch Drehen der Vorrichtung 1" um 120 Grad kann die Innenwandung über ihren vollen Umfang über die in Z-Richtung verlaufende Strecke der Beleuchtungsstreifen 34 erfasst werden. Wird die Vorrichtung 1" gleichzeitig entlang der Längsachse 36 in die Kavität 31 hineinverfahren, kann spiralförmig die komplette Innenwandung 32 der Kavität 31 abgetastet werden.

Alternativ können auch mehr als drei Beleuchtungsstreifen (34) verwendet werden, beispielsweise vier Beleuchtungsstreifen (34), dann mit je einer Winkeldifferenz von 90° zueinander.

## Patentansprüche

1. Vorrichtung zum Erfassen einer 3D-Struktur eines Objekts (2) umfassend:
- einen ersten Laser-Emitter (3), der Laserstrahlung mit einer ersten Wellenlänge erzeugt,
- einen zweiten Laser-Emitter (5), der Laserstrahlung mit einer zweiten Wellenlänge erzeugt,
wobei sich die erste Wellenlänge von der zweiten Wellenlänge unterscheidet,
- einen ersten Strahlteiler (8), der die Laserstrahlung der Laser-Emitter (3, 5) jeweils in eine Referenzstrahlung (9) und eine Beleuchtungsstrahlung (10) aufteilt, wobei die Beleuchtungsstrahlung (10) auf das zu vermessende Objekt (2) trifft, von dem Objekt (2) als Objektstrahlung (24) reflektiert wird und mit der Referenzstrahlung (9) interferiert und
- einen Detektor (14), der die daraus entstehenden Interferenzmuster aufnimmt,
**gekennzeichnet durch**
- ein Selektionshologramm (22), das ausgebildet ist, um ausschließlich Objektstrahlung (24), die in einem vorgegebenen Einfallswinkelbereich auf das Selektionshologramm (22) trifft, derart abzulenken, dass sie auf ihrem weiteren Weg in einem Winkel innerhalb eines Erfassungswinkelbereichs auf einen Erfassungsbereich (26) des Detektors (14) fällt, und
- das Selektionshologramm (22) weiter ausgebildet ist, um Objektstrahlung (24), die außerhalb des Einfallswinkelbereichs auf das Selektionshologramm (22) trifft, ungebeugt passieren zu lassen, so dass sie auf ihrem weiteren Weg entweder am Erfassungsbereich (26) des Detektors (14) vorbeiläuft oder in einem Winkel außerhalb eines Erfassungswinkelbereichs auf den Erfassungsbereich (26) des Detektors (14) auftrifft.

2. Vorrichtung nach Anspruch 1, **dadurch gekennzeichnet, dass** das Selektionshologramm (22) ein Volumenhologramm ist, das ausgebildet ist, ausschließlich Objektstrahlung (24) unter Erfüllung der Bragg-Gleichung derart abzulenken, dass sie auf ihrem weiteren Weg auf den Detektor (14) trifft, wobei die Objektstrahlung (24) bei Nichterfüllung der Bragg-Gleichung das Volumenhologramm ungebeugt passiert.

3. Vorrichtung nach einem der vorhergehenden Ansprüche, **dadurch gekennzeichnet, dass** nur solche Objektstrahlung (24) von einer Auswerteeinheit ausgewertet wird, die in einem Winkel innerhalb des Erfassungswinkelbereichs auf den Erfassungsbereich (26) trifft.

4. Vorrichtung nach einem der vorhergehenden Ansprüche, **gekennzeichnet durch** einen zweiten Strahlteiler (12), auf den die vom Selektionshologramm (22) abgelenkte Objektstrahlung (24) trifft und derart in Richtung Detektor (14) reflektiert wird, dass sie auf den Erfassungsbereich des Detektors (14) fällt.

5. Vorrichtung nach Anspruch 4, **dadurch gekennzeichnet, dass** der zweite Strahlteiler (12) derart angeordnet ist, dass Objektstrahlung (24), die das Selektionshologramm (22) ungebeugt verlässt, auf den zweiten Strahlteiler (12) trifft, reflektiert wird und am Erfassungsbereichs (26) des Detektors (14) vorbeiläuft.

6. Vorrichtung nach einem der vorhergehenden Ansprüche, **dadurch gekennzeichnet, dass** die Laser-Emitter (3, 5) voneinander beabstandet angeordnet sind, wobei das Verhältnis von Wellenlängendifferenz zwischen den Wellenlägen der einzelnen Laser-Emitter (3, 5) und dem Abstand der Laser-Emitter (3, 5) im Bereich von 10⁻⁶ bis 10⁻³, bevorzugt 10⁻⁵, beträgt.

7. Vorrichtung nach Anspruch 6, **gekennzeichnet durch** eine Linse (7), die die Laserstrahlung (4) kollimiert und in Richtung des ersten Strahlteilers (8) lenkt, wobei der erste Strahlteiler (8) ein optisches Gitter (15) umfasst, das Teile der auftreffende Laserstrahlung (4) in Abhängigkeit ihrer Wellenlängen und bei gegebenem Verhältnis von Wellenlängendifferenz und Abstand der Laser-Emitter (3, 5) als Beleuchtungsstrahlung (10) derart ablenkt, dass die kollimierten Beleuchtungsstrahlungen (10, 10a) der Laser-Emitter (3, 5) mit einem maximalen Winkelspektrumsbereich relativ zu einem Zentrahlstrahl (10a) im Bereich von 0 bis 4 mrad, bevorzugt von 0,5 bis 3 mrad, den Strahlteiler (8) verlassen.

8. Vorrichtung nach einem der vorherigen Ansprüche, **gekennzeichnet durch** ein Dammann-Gitter (17), das die Beleuchtungsstrahlung (10) eines Laser-Emitters (3, 5) in mehrere vertikal nebeneinander liegende kollimierte Beleuchtungsstrahlen (18) aufteilt, die als Beleuchtungsspots auf das zu erfassende Objekt (2) treffen und bevorzugt so nebeneinander angeordnet sind, dass sie zusammen einen Beleuchtungsstreifen (34) bilden.

9. Vorrichtung nach Anspruch 8, **gekennzeichnet durch** ein Auffächerhologramm (19), das die Beleuchtungsstrahlen (18) in horizontaler Richtung derart auffächert, dass mehrere Beleuchtungsstreifen auf das Objekt (2) treffen, bevorzugt umfassend einen Mittenstreifen, besonders bevorzugt umfassend zwei Randstreifen und ein Mittenstreifen.

10. Vorrichtung nach Anspruch 9, **dadurch gekennzeichnet, dass** das Auffächerhologramm (19) ausgebildet ist, die Beleuchtungsstreifen derart horizontal von der optischen Achse weg abzulenken, dass die Beleuchtungsstreifen auf das Selektionshologramm (22) treffen und von dem Selektionshologramm (22) zur optischen Achse hin gebeugt werden, bevorzugt unter Erfüllung der Bragg-Bedingung.

11. Vorrichtung nach einem der vorhergehenden Ansprüche, **gekennzeichnet, durch** einen optischen Wellenleiter-Chip (27), der den ersten Strahlteiler (8) umfasst und in den die Laserstrahlung (4) der Laser-Emitter (3, 5) eingekoppelt werden, wobei der optischen Wellenleiter-Chip (27) bevorzugt einen Arrayed Waveguide Grating (28) umfasst, das ausgebildet ist, die Beleuchtungsstrahlung (10) der einzelnen Laser-Emitter (3, 5) in einem Lichtleiter (29) zu vereinen.

12. Vorrichtung nach einem der vorhergehenden Ansprüche, **dadurch gekennzeichnet, dass** die Vorrichtung (1) als Kavitätsscanner zur dreidimensionalen Erfassung einer Kavität (31) mit einer Innenwandung (32) ausgebildet ist.

13. Vorrichtung nach Anspruch 8, **gekennzeichnet durch** Wellenfront-Rotatoren (33), die ausgebildet sind, die Beleuchtungsstreifen (34) derart zu rotieren, dass sie quer zur Strahlverlaufsrichtung, bevorzugt radial zur optischen Achse angeordnet sind.

14. Vorrichtung nach Anspruch 13, **dadurch gekennzeichnet, dass** die rotierten Beleuchtungsstreifen (34) gleichmäßig verteilt sind, so dass die Winkel zwischen jeweils zwei benachbarten Beleuchtungsstreifen (34) übereinstimmen, wobei bevorzugt drei Beleuchtungsstreifen (34) verwendet werden, die jeweils in einem Winkel von 120° zueinander angeordnet sind.

15. Vorrichtung nach Anspruch 13 oder 14, **dadurch gekennzeichnet, dass** in Strahlverlaufsrichtung hinter den Wellenfront-Rotatoren (33) ein Tripelprisma (35) angeordnet ist, das drei mit dem Tripelprisma (35) korrespondierende Beleuchtungsstreifen (34) um 90° derart abgelenkt, dass die Beleuchtungsstreifen (34) je parallel zur optischen Achse verlaufen.

16. Vorrichtung nach Anspruch 15, **dadurch gekennzeichnet, dass** die durch das Tripelprisma (35) abgelenkten Beleuchtungsstreifen (34) parallel zur Längsachse einer Kavität (31) auf deren Innenwandung (32) treffen.

## Claims

1. Device for determining a 3D structure of an object (2) comprising:
- a first laser emitter (3), which generates laser radiation with a first wavelength,
- a second laser emitter (5), which generates laser radiation with a second wavelength,
wherein the first wavelength differs from the second wavelength,
- a first beam splitter (8), which splits the laser radiation of the laser emitters (3, 5) into a reference radiation (9) and an illuminating radiation (10) each, wherein the illuminating radiation (10) impinges on the object (2) to be measured, is reflected by the object (2) as object radiation (24) and interferes with the reference radiation (9) and
- a detector (14), which receives the interference patterns resulting therefrom,
**characterized by**
- a selection hologram (22), which is designed to exclusively deflect object radiation (24), which impinges on the selection hologram (22) at a predefined incidence angle range, in such a manner that, on its further path, the object radiation (24) impinges on a determination area (26) of the detector (14) at an angle within a determination angle range, and
- the selection hologram (22) is further designed so as to allow object radiation (24), which impinges on the selection hologram (22) outside of the incidence angle range, to pass undiffracted, so that, on its further path, it either passes by the determination area (26) of the detector (14) or impinges on the determination area (26) of the detector (14) at an angle outside a determination angle range.

2. Device according to claim 1, **characterized in that** the selection hologram (22) is a volume hologram, which is designed to exclusively deflect object radiation (24) that fulfills the Bragg equation in such a manner that, on its further path, it impinges on the detector (14), wherein the object radiation (24) passes through the volume hologram undiffracted if the Bragg equation is not fulfilled.

3. Device according to any one of the preceding claims, **characterized in that** only such object radiation (24) is evaluated by an evaluation unit which impinges on the determination area (26) at an angle within the determination angle range.

4. Device according to any one of the preceding claims, **characterized by** a second beam splitter (12), which is hit by the object radiation (24) deflected by the selection hologram (22), the object radiation (24) being deflected in the direction of the detector (14) in such a manner that it impinges on the determination area of the detector (14).

5. Device according to claim 4, **characterized in that** the second beam splitter (12) is arranged in such a manner that object radiation (24), which leaves the selection hologram (22) without being diffracted, impinges on the second beam splitter (12), is reflected and passes by the determination area (26) of the detector (14).

6. Device according to any one of the preceding claims, **characterized in that** the laser emitters (3, 5) are arranged at a distance from one another, wherein the ratio of the wavelength difference between the wavelengths of the individual laser emitters (3, 5) to the distance between the laser emitters (3, 5) ranges from 10⁻⁶ to 10⁻³ and preferably is 10⁻⁵.

7. Device according to claim 6, **characterized by** a lens (7), which collimates the laser radiation (4) and directs it in the direction of the first beam splitter (8), wherein the first beam splitter (8) comprises an optical grating (15), which deflects parts of the incident laser radiation (4) depending on their wavelengths and at a given ratio of wavelength difference and distance between the laser emitters (3, 5) as illuminating radiation (10) in such a manner that the collimated illuminating beams (10, 10a) of the laser emitters (3, 5) leave the beam splitter (8) with a maximum angular spectrum range relative to a central beam (10a) ranging from 0 to 4 mrad and preferably from 0.5 to 3 mrad.

8. Device according to any one of the preceding claims, **characterized by** a Dammann grating (17), which splits the illuminating radiation (10) of a laser emitter (3, 5) into several collimated illuminating beams (18), which are disposed vertically next to one another and impinge on the object (2) to be measured as illuminating spots and which preferably are disposed next to one another such that together they form an illuminating strip (34).

9. Device according to claim 8, **characterized by** a fanned hologram (19), which fans the illuminating beams (18) in the horizontal direction such that several illuminating strips impinge on the object (2), the illuminating strips preferably comprising a center strip and particularly preferably comprising two edge strips and a center strip.

10. Device according to claim 9, **characterized in that** the fanned hologram (19) is designed to deflect the illuminating strips horizontally away from the optical axis in such a manner that the illuminating strips impinge on the selection hologram (22) and are diffracted by the selection hologram (22) toward the optical axis, preferably fulfilling the Bragg condition.

11. Device according to any one of the preceding claims, **characterized by** an optical waveguide chip (27), which comprises the first beam splitter (8) and into which the laser radiation (4) of the laser emitters (3, 5) is coupled, wherein the optical waveguide chip (27) preferably comprises an arrayed waveguide grating (28), which is designed to combine the illuminating radiation (10) of the individual laser emitters (3, 5) into an optical fiber (29).

12. Device according to any one of the preceding claims, **characterized in that** the device (1) is designed as a cavity scanner for the three-dimensional detection of a cavity (31) having an inner wall (32).

13. Device according to claim 8, **characterized by** wavefront rotators (33), which are designed to rotate the illuminating strips (34) in such a manner that they are disposed transversely to the beam propagation direction, preferably radially to the optical axis.

14. Device according to claim 13, **characterized in that** the rotating illuminating strips (34) are distributed uniformly such that the angles between any two adjacent illuminating strips (34) are identical, wherein preferably three illuminating strips (34) are used, which are disposed at an angle of 120° to one another.

15. Device according to claim 13 or 14, **characterized in that** a triple prism (35) is arranged downstream from the wavefront rotators (33) in the direction of the beam path, the triple prism deflecting by 90° three illuminating strips (34) that correspond with the triple prism (35) in such a manner that the illuminating strips (34) each extend parallel to the optical axis.

16. Device according to claim 15, **characterized in that** the illuminating strips (34) deflected by the triple prism (35) impinge on the inner wall (32) of a cavity (31) parallel to the longitudinal axis of the cavity.

## Revendications

1. Dispositif de mesure d'une structure 3D d'un objet (2), comprenant :
- un premier émetteur laser (3) qui génère un rayonnement laser ayant une première longueur d'onde,
- un second émetteur laser (5), qui génère un rayonnement laser ayant une seconde longueur d'onde,
la première longueur d'onde étant différente de la seconde longueur d'onde,
- un premier séparateur de faisceau (8), qui divise le rayonnement laser des émetteurs laser (3, 5) respectivement en un rayonnement de référence (9) et un rayonnement lumineux (10), le rayonnement lumineux (10) frappant l'objet (2) à mesurer, étant réfléchi par l'objet (2) sous forme de rayonnement d'objet (24) et interférant avec le rayonnement de référence (9) et
- un détecteur (14) qui enregistre le motif d'interférence en résultant, **caractérisé par**
- un hologramme de sélection (22) qui est conçu pour dévier uniquement le rayonnement d'objet (24) qui frappe l'hologramme de sélection (22) dans une plage d'angle d'incidence prédéterminée de sorte qu'il tombe sur la suite de son trajet selon un angle compris dans une plage d'angle de mesure sur une plage de mesure (26) du détecteur (14), et
- l'hologramme de sélection (22) est en outre conçu pour permettre au rayonnement d'objet (24) qui frappe l'hologramme de sélection (22) en dehors de la plage d'angle d'incidence, de passer sans diffraction, de sorte
- qu'il passe soit devant la zone de mesure (26) du détecteur (14) sur la suite de son trajet soit frappe la zone de mesure (26) du détecteur (14) à un angle situé en-dehors d'une plage d'angle de mesure.

2. Dispositif selon la revendication 1, **caractérisé en ce que** l'hologramme de sélection (22) est un hologramme volumique conçu pour dévier exclusivement le rayonnement d'objet (24) en vérifiant l'équation de Bragg de telle manière qu'il frappe le détecteur (14) sur la suite de son trajet, le rayonnement d'objet (24) passant l'hologramme volumique sans diffraction lorsque l'équation de Bragg n'est pas vérifiée.

3. Dispositif selon l'une quelconque des revendications précédentes, **caractérisé en ce que** seul un tel rayonnement d'objet (24) est évalué par une unité d'évaluation qui frappe la zone de mesure (26) à un angle compris dans la plage d'angle de mesure.

4. Dispositif selon l'une quelconque des revendications précédentes, **caractérisé par** un second séparateur de faisceau (12) qui est frappé par le rayonnement d'objet (24) dévié par l'hologramme de sélection (22) et le réfléchit dans la direction du détecteur (14) de manière à tomber sur la zone de mesure du détecteur (14).

5. Appareil selon la revendication 4, **caractérisé en ce que** le second séparateur de faisceau (12) est agencé de sorte que le rayonnement d'objet (24), qui laisse l'hologramme de sélection (22) sans diffraction, frappe le second séparateur de faisceau (12), se reflète et passe devant la zone de mesure (26) du détecteur (14).

6. Dispositif selon l'une quelconque des revendications précédentes, **caractérisé en ce que** les émetteurs laser (3, 5) sont disposés à distance l'un de l'autre, le rapport entre la différence de longueur d'onde entre les longueurs d'onde des émetteurs laser individuels (3, 5) et la distance entre les émetteurs laser (3, 5) étant situé dans la plage de 10⁻⁶ à 10⁻³, étant de préférence égal à 10⁻⁵.

7. Dispositif selon la revendication 6, **caractérisé par** une lentille (7) qui collimate le rayonnement laser (4) et le dirige dans la direction du premier séparateur de faisceau (8), le premier séparateur de faisceau (8) comprenant un réseau optique (15) qui dévie des parties du rayonnement laser incident (4) en fonction de leurs longueurs d'onde et pour un rapport donné entre la différence de longueur d'onde et la distance des émetteurs laser (3, 5) en tant que rayonnement lumineux (10) de sorte que les rayonnements lumineux collimatés (10, 10a) des émetteurs laser (3, 5) quittent le séparateur de faisceau (8) avec une plage de spectre angulaire maximale par rapport à un faisceau central (10a) compris dans la plage de 0 à 4 mrad, de préférence de 0,5 à 3 mrad.

8. Dispositif selon l'une quelconque des revendications précédentes, **caractérisé par** un réseau Dammann (17) qui divise le rayonnement lumineux (10) d'un émetteur laser (3, 5) en une pluralité de faisceaux lumineux collimatés (18) disposés verticalement les uns à côté des autres, qui frappent l'objet (2) à mesurer en tant que points d'éclairage et sont de préférence disposés les uns à côté des autres de manière à former ensemble une bande d'éclairage (34).

9. Dispositif selon la revendication 8, **caractérisé par** un hologramme en éventail (19) qui déploie les faisceaux d'éclairage (18) dans la direction horizontale de sorte qu'une pluralité de bandes d'éclairage frappent l'objet (2), comprenant de préférence une bande centrale, comprenant de manière particulièrement préférée deux bandes latérales et une bande centrale.

10. Dispositif selon la revendication 9, **caractérisé en ce que** l'hologramme en éventail (19) est conçu pour dévier les bandes d'éclairage horizontalement de l'axe optique de sorte que les bandes d'éclairage frappent l'hologramme de sélection (22) et sont diffractées vers l'axe optique par l'hologramme de sélection (22), de préférence en remplissant la condition de Bragg.

11. Dispositif selon l'une quelconque des revendications précédentes, **caractérisé par** une puce de guide d'onde optique (27) qui comprend le premier séparateur de faisceau (8) et dans laquelle le rayonnement laser (4) des émetteurs laser (3, 5) est couplé, la puce de guide d'onde optique (27) comprenant de préférence un réseau de guide d'onde en réseau (28) qui est conçu pour combiner le rayonnement lumineux (10) des émetteurs laser individuels (3, 5) dans un guide de lumière (29).

12. Dispositif selon l'une quelconque des revendications précédentes, **caractérisé en ce que** le dispositif (1) est conçu comme un scanner de cavité pour la mesure tridimensionnelle d'une cavité (31) avec une paroi intérieure (32).

13. Dispositif selon la revendication 8, **caractérisé par** des rotateurs de front d'onde (33) qui sont conçus pour faire tourner les bandes d'éclairage (34) de manière à ce qu'elles soient disposées transversalement à la direction du faisceau, de préférence radialement à l'axe optique.

14. Dispositif selon la revendication 13, **caractérisé en ce que** les bandes d'éclairage tournées (34) sont uniformément réparties de sorte que les angles entre deux bandes d'éclairage adjacentes (34) correspondent, de préférence trois bandes d'éclairage (34) étant utilisées, lesquelles sont disposées chacune à un angle de 120° par rapport aux autres.

15. Dispositif selon les revendications 13 ou 14, **caractérisé en ce qu'**un triple prisme (35) est disposé derrière les rotateurs de front d'onde (33) dans la direction du faisceau, prisme qui dévie trois bandes d'éclairage (34) correspondant au triple prisme (35) de 90° de sorte que les bandes d'éclairage (34) sont chacune parallèles à l'axe optique.

16. Dispositif selon la revendication 15, **caractérisé en ce que** les bandes d'éclairage (34) déviées par le triple prisme (35) frappent, parallèlement à l'axe longitudinal d'une cavité (31), la paroi intérieure (32) de celle-ci.
